# EUROPEAN PATENT APPLICATION

(11) **EP 1 870 745 A1**
(43) Date of publication of application: **26.12.2007**
(21) Application number: 07012139.7
(22) Date of filing: 21.06.2007
(51) Int. Cl.: G02B 6/00

(54) **Backlight assembly and liquid crystal display device having the same**

(30) Priority: 22.06.2006 KR 20060056231
(71) Applicant: Samsung Electronics Co., Ltd., Suwon-si, Gyeonggi-Do (KR)
(72) Inventor: Chu, Hong Sig, Cheonan-si, Choongcheongnam-do (KR)
(74) Representative: Dr. Weitzel & Partner

(57) **Abstract**

A backlight assembly and a liquid crystal display ("LCD") device having the same are provided. The backlight assembly includes a light guide plate (44) including an incident surface (144) formed at a lateral side of the light guide plate (44), a light emitting diode ("LED") (45) positioned below the light guide plate (44) and a reflecting plate (47) reflecting light emitted from the LED (45) towards the incident surface.

## Description

This application claims priority to Korean Patent Application No. 2006-56231, filed on June 22, 2006, and all the benefits accruing therefrom under 35 U.S.C. § 119, the contents of which in its entirety are herein incorporated by reference.

### BACKGROUND OF THE INVENTION

### 1. Field of the Invention

The present invention relates to a backlight assembly and a liquid crystal display ("LCD") device having the backlight assembly. More particularly, the present invention relates to the backlight assembly capable of reducing its size and weight by changing the location of a light emitting diode ("LED") and a LCD device having the backlight assembly.

### 2. Description of the Related Art

Liquid crystal display ("LCD") devices have been widely used in various industry fields due to the advantages of being lightweight, compact and requiring low power consumption. The LCD device displays images by applying an electric field to liquid crystals having anisotropic permittivity injected between two substrates. The amount of light passing through the substrates is adjusted by controlling the intensity of the electric field.

Since a liquid crystal ("LC") panel of the LCD device is not self-emissive, the LCD device requires a backlight unit supplying light to the LC panel.

A light emitting diode ("LED") may be used as a backlight unit because compared to a cold cathode fluorescent lamp, it allows less power consumption, better resistance to external impact, wider uses in small and compact devices, a longer lifespan, and a faster switching speed.

When LEDs are used, light emitted from the LEDs overlap in a region adjacent to an incident surface of a light guide plate. In such a case, an excessive amount of light is incident on parts of the region where light emitted from the LEDs overlap. This leads to a white spot phenomenon, which refers to occurrences where the overlapping regions become brighter than the non-overlapping regions.

A separation of the light guide plate from the LEDs reduces or effectively prevents such white spot phenomenon. In other words, the white spot phenomenon may be effectively prevented if a distance between the light guide plate and the LED is at least 6mm. An increase in the distance between the light guide plate and the LED correspondingly increases the size of the LCD device.

### BRIEF SUMMARY OF THE INVENTION

An exemplary embodiment provides a backlight assembly with reduced size and less weight and a liquid crystal display ("LCD") device having the backlight assembly.

An exemplary embodiment provides a backlight assembly including a light guide plate including an incident surface formed at a lateral side of the light guide plate, an LED positioned below the light guide plate and a reflecting plate reflecting light emitted from the LED towards the incident surface.

An exemplary embodiment provides a liquid crystal display device including a liquid crystal panel displaying images and a backlight assembly supplying light to the LC panel, wherein the backlight assembly includes a light guide plate including an incident surface formed at a lateral side of the light guide plate, an LED positioned above the light guide plate, and a reflecting plate reflecting light emitted from the LED towards the incident surface.

### BRIEF DESCRIPTION OF THE DRAWINGS

The above and other features and advantages of the present invention will become more apparent by describing in detailed exemplary embodiments thereof with reference to the exemplary embodiments thereof with reference to the attached drawings in which:
FIG. 1 is an exploded perspective view illustrating an exemplary embodiment of an LCD device according to the present invention;
FIG. 2 is a cross-sectional view taken along line I-I' of FIG. 1;
FIG. 3 is a plan view illustrating an exemplary embodiment of a light source substrate for radiating heat generated in an LED according to the present invention;
FIG. 4 is a cross-sectional view illustrating an exemplary embodiment of a light path emitted from the LED, reflected by a reflecting plate and directed to a light guide plate according to the present invention;
FIG. 5 is an exploded perspective view illustrating another exemplary embodiment of the of an LCD device according to the present invention; and
FIG. 6 is a cross-sectional view taken along line II-II' of FIG. 5.

### DETAILED DESCRIPTION OF THE INVENTION

Exemplary embodiments of the invention are described more fully hereinafter with reference to the accompanying drawings. This invention may, however, be embodied in many different forms without departing from the inventive principles disclosed herein, and the scope of the present invention should not be construed as being limited to these following embodiments. Rather, these embodiments are provided so that this disclosure will be thorough and complete, and will fully convey the concept of the invention to those skilled in the art by way of example and not of limitation.

It will be understood that when an element or layer is referred to as being "on," "connected to" or "coupled to" another element or layer, it can be directly on, connected or coupled to the other element or layer or intervening elements or layers may be present. In contrast, when an element is referred to as being "directly on," "directly connected to" or "directly coupled to" another element or layer, there are no intervening elements or layers present. Like numbers refer to like elements throughout. As used herein, the term "and/or" includes any and all combinations of one or more of the associated listed items.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" and/or "comprising," or "includes" and/or "including" when used in this specification, specify the presence of stated features, regions, integers, steps, operations, elements, and/or components, but do not preclude the presence or addition of one or more other features, regions, integers, steps, operations, elements, components, and/or groups thereof.

Spatially relative terms, such as "below", "lower", "above", "upper" and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" the other elements or features. Thus, the exemplary term "below" can encompass both an orientation of above and below.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and the present disclosure, and will not be interpreted in an idealized or overly formal sense unless expressly so defined herein.

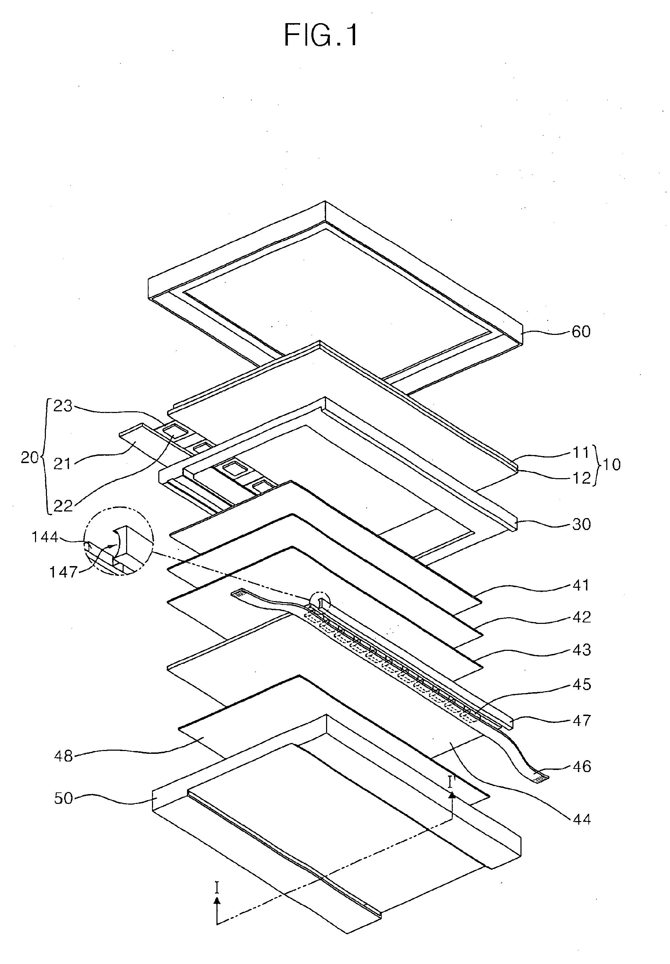

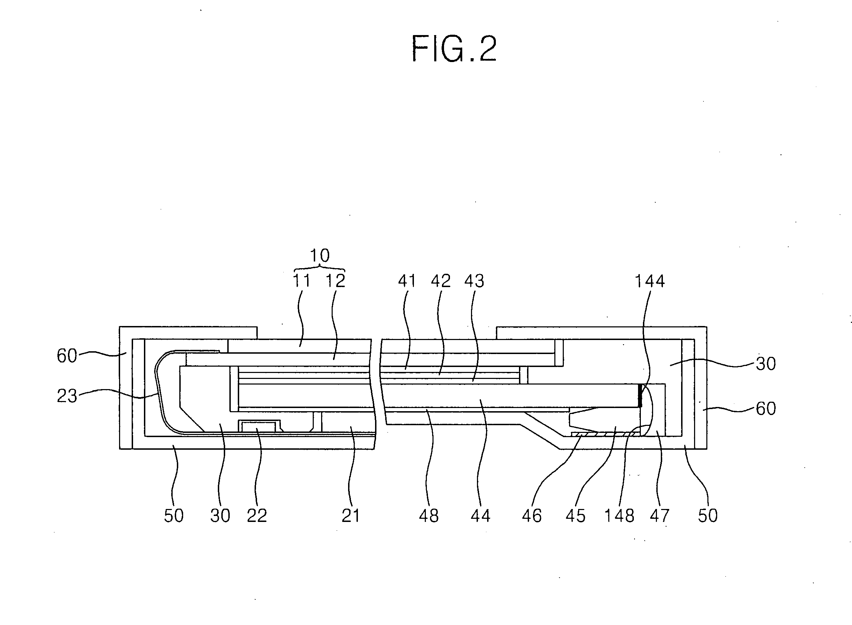

FIG. 1 is an exemplary embodiment of an LCD device according to the present invention. FIG. 2 is a cross-sectional view taken along line I-I' of FIG. 1.

Referring to FIGs. 1 and 2, the LCD device includes an LC panel 10 for displaying images, a backlight assembly for supplying light to the LC panel 10, a panel driving portion 20 connected to one side of the LC panel 10 to supply a driving signal to the LC panel 10, a mold frame 30 for supporting the LC panel 10 and the backlight assembly, and bottom chassis 50 and top chassis 60 coupled to each other to accommodate and hold the LC panel 10 and the mold frame 30.

The LC panel 10 includes a color filter substrate 11 and a thin film transistor ("TFT") substrate 12 which are disposed opposite to each other and facing each other with a liquid crystal layer interposed therebetween.

The color filter substrate 11 includes a black matrix for preventing light from being leaked, a color filter for expressing various colors, a common electrode for forming a vertical electric field with a pixel electrode arranged on the TFT substrate 12 and an alignment layer for aligning the liquid crystals. In an exemplary embodiment, the color filter substrate 11 may be made of transparent insulating material such as glass or plastic.

The TFT substrate 12 includes gate lines and data lines, which are formed to cross each other, the TFTs formed at the intersections of the gate lines and the data lines, a pixel electrode contacting the TFTs, and an alignment layer for aligning the liquid crystals. In an exemplary embodiment, the TFT substrate 12 may be made of a transparent insulating material such as glass or plastic.

The panel driving portion 20 is connected to one side of the LC panel 10 and supplies a driving signal to the gate and data lines of the LC panel 10. The panel driving portion 20 includes a gate driving portion for driving the gate lines, a data driving portion for driving the data lines, a timing control portion for supplying a control signal and an image signal to the gate and data driving portions and a power source portion for supplying an electric power to the gate and data driving portions.

The gate driving portion is formed such that a gate driving circuit is mounted on a tape carrier package ("TCP") 23. The TCP 23 is disposed between the printed circuit board ("PCB") and the LC panel 10. In an exemplary embodiment, the TCP 23 may be mounted on the TFT substrate 12 by use of the chip on glass ("COG") method or may be integrated on the TFT substrate 12

The data driving portion may be formed such that one side of the data TCP 23 having a data driving circuit 22 mounted thereon may be connected to the PCB 21. A timing controller and the power source portion are mounted on the PCB 21 so that the timing controller and the power source portion may supply the data driving circuit 22 with the control signal, the image signal and the power signal. In an exemplary embodiment, the data TCP 23 may be flexible so that the TCP 23 may be bent to surround one side of the mold frame 30 while the PCB 21, which may be connected to the data TCP 23, may be placed on a bottom surface of the mold frame 30.

The mold frame 30 may be formed to have a step portion in its inner sidewall. The mold frame 30 accommodates and holds the backlight assembly thereinside. The step portion formed in the inner sidewall in the mold frame 30 may support and hold the LC panel 10. The mold frame 30 includes a groove formed to protect the data driving circuit 22 mounted on the data TCP 23 from external force. In an exemplary embodiment, a step portion may be formed on the bottom surface of the mold frame 30 so that the step portion may hold the PCB 21.

The bottom chassis 50 supports and holds the backlight assembly, the LC panel 10, the data TCP 23 and the PCB 21, which are accommodated and held by the mold frame 30.

The top chassis 60 may be coupled to the bottom chassis 50 and may surround a non-display area of an edge or peripheral area of a front surface of the LC panel 10 and the mold frame 30. The bottom chassis 50 and the top chassis 60 coupled to each other tightly holds the LC panel 10 and absorbs an external impact to protect the LC panel 10, the backlight assembly, and the panel driving portion 20.

The backlight assembly includes a light guide plate 44 for guiding light, a plurality of LEDs 45 formed below the light guide plate 44 to overlap at least a portion of the light guide plate to emit light to one side of the light guide plate 44, a reflecting plate 47 for reflecting light emitted from the LEDs 45 to direct light to an incident surface of the light guide plate 44, a reflecting sheet 48 for reflecting light supplied to a lower portion of the light guide plate 44 upwardly and optical sheets 41, 42 and 43 formed on the light guide plate 44 to improve light efficiency.

The optical sheets 41, 42 and 43 are formed on the light guide plate 44 to provide incident rays of the light emitted from the upper portion of the light guide plate 44 on the LC panel 10. The optical sheets 41, 42 and 43 allow the incident light from the light guide plate 44 to be vertically incident on the LC panel 10, thereby improving light efficiency. An exemplary embodiment of the optical sheets 41, 42 and 43 may include a protecting sheet 41, a prism sheet 42, and a diffusion sheet 43.

The diffusion sheet 43 allows the light emitted from the light guide plate 44 to face towards the LC panel 10, diffuses the light so that a uniform light distribution may be provided in a relatively wider range and provides incident rays to the LC panel 10. In an exemplary embodiment, the diffusion sheet 43 may be made of a transparent resin film whose both sides are coated with a light diffusing material. The prism sheet 42 converts a moving angle of light diffused by the diffusion sheet 43 to be vertical to the LC panel 10. The vertical angle between the light from the diffusion sheet 43 and the LC panel 10 may maximize light efficiency. The protecting sheet 41 diffuses light passing through the prism sheet 42 while protecting a surface of the prism sheet 42.

The reflecting sheet 48 arranged on a bottom surface of the light guide plate 44 reflects the light emitted to the lower portion of the light guide plate 44 toward the upper portion of the light guide plate 44. In an exemplary embodiment, the reflecting sheet 48 may be made of a sheet having high reflectivity.

The light guide plate 44 converts a line-shaped light supplied through its incident surface into a surface-shaped light and guides the surface-shaped light to the LC panel 10. The light guide plate 44 may have a plurality of V-shaped grooves or projections for directing light from the incident surface 144 to an opposite side surface.

In an exemplary embodiment, the LEDs 45 may be mounted on a light source substrate 46 at a substantially uniform interval and may be driven by the driving signal supplied through the light source substrate 46 to generate light.

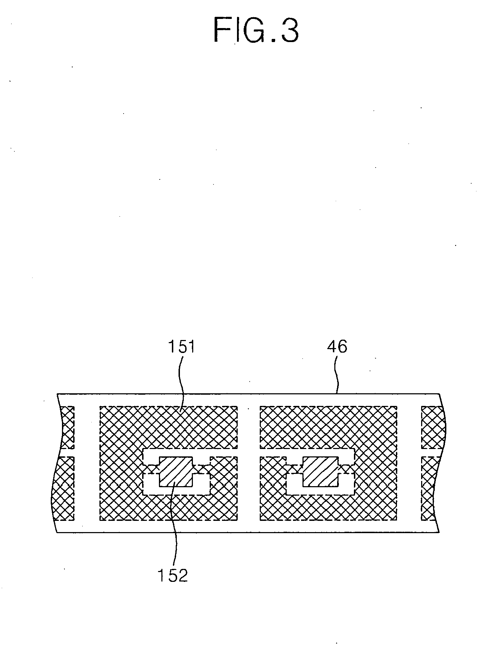

In an exemplary embodiment, the light source substrate 46 may be realized by a flexible printed circuit ("FPC") or a PCB. The light source substrate 46 may be formed in the form of a long bar and may be connected to an electrical power source and an area on which the LEDs 45 are mounted. Electrodes are formed at both ends of the light source substrate 46 so that a driving power may be provided to the LEDs 45. The light source substrate 46, as shown in FIG. 3, includes a LED pad 152 for supplying the electric power to the LEDs 45 connected thereto, and a heat-releasing pad 151 connected to the LED pad 152 to externally release heat generated in the LED 45.

The LED pad 152 may be made of conductive metal and may be formed in an area on which the LEDs 45 may be mounted. The heat releasing pad 151 may be connected to the LED pad 152. Such structure allows radiation of heat generated in the LEDs 45 to the external portion through the LED pad 152 and the heat-releasing pad 151.

As shown in FIG. 1, the light source substrate 46 having a plurality of LEDs 45 mounted thereon may be adjacent to the incident surface 144 of the light guide plate 44 and may then be attached to the bottom chassis 50. Since the light source substrate 46 may be attached to the bottom chassis 50, light generated in the light source substrate 46 may be radiated to the bottom chassis 50. As a result, the LEDs 45 are not overheated and accordingly, defective displays caused by an abnormal operation of the LEDs 45 of the LCD device are reduced or effectively prevented.

Light emitted from the LEDs 45 may be directed to the incident surface 144 formed on at least one side of the light guide plate 44. The reflecting plate 47 may be disposed to face both a light emitting surface of the LEDs 45 and the incident surface 144 of the light guide plate 44.

The reflecting plate 47 directs light emitted from the LEDs 45 to the incident surface 144 of the light guide plate 44. The reflecting plate 47, as shown in FIG. 2, reflects light emitted from the LEDs 45 to the incident surface 144 of the light guide plate 44, because the light emitting surface of the LEDs 45 and the incident surface 144 of the light guide plate 44 are formed on substantially the same vertical axis. The reflecting plate 47, as shown in FIG. 1, may be formed along with the incident surface 144 of the light guide plate 44. A semi-pillar shaped groove 147 whose cross section is a semicircle may be formed in the reflecting plate 47. The groove 147 may be formed to cover both the LEDs 45 and the incident surface 144 such that an edge of one side of the groove 147 contacts or covers a lower portion of the light emitting surface of the LEDs 45 and an edge of the other side contacts or covers the upper portion of the incident surface 144 of the light guide plate 44. The light source substrate 46 may be connected to the reflecting plate 47 to secure the reflecting plate 47 covering the LEDs 45. Due to the structure of the groove 147 described above, leakage of light emitted to the reflecting plate 47 may be reduced or prevented.

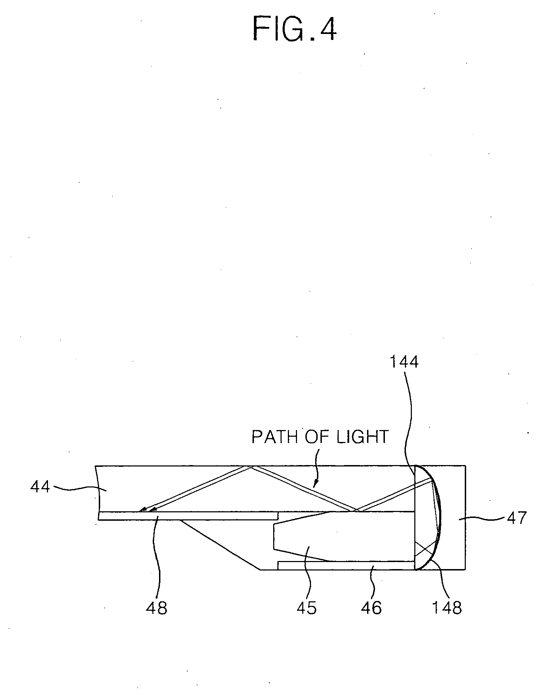

The semi-pillar shaped groove 147 of the reflecting plate 47 reflects light through a reflecting surface 148. As shown in FIG. 4, the path of light emitted from the LEDs 45 depends on a reflection angle of the reflecting surface 148 of the reflecting plate 47. The length of the light path formed by light reflected by the reflecting surface 148 may be longer than the distance between conventional LEDs and a light guide plate. Accordingly, the white spot phenomenon, which may occur in the display area of a conventional LC panel, may be reduced or effectively prevented.

The LEDs 45 may overlap at least a portion of the reflecting sheet 48. After the reflecting sheet 48 is formed below the light guide plate 44, the light source substrate 46 on which the LEDs 45 are mounted may be formed at an area adjacent to the incident surface 144 of the light guide plate 44 on the reflecting sheet 48. Thus, when light emitted from the LEDs 45 is incident on the incident surface 144 of the light guide plate 44, light directed to the lower portion of the incident surface 144 of the light guide plate 44 may be reflected upwardly by the reflecting sheet 48, thereby further improving light efficiency.

In an exemplary embodiment, the LEDs 45, the PCB 21 and the data TCP 23 are disposed at the bottom surface of the light guide plate 44. In the exemplary embodiment, the thickness of the backlight assembly increases due to the thickness of the LEDs 45. However, because the PCB 21 and the data TCP 23 have a greater thickness than that of the LEDs 45, the total thickness of the backlight assembly does not increase. Instead, according to the exemplary embodiment, the thickness of the LCD device can be reduced by a sum of the distance between the LEDs 45 and the light guide plate 44 and the length of the LEDs 45 compared to a conventional LCD device. Since the size of the mold frame 30, the bottom chassis 50 and the top chassis 60 can be reduced the weight of the LCD device can be correspondingly reduced.

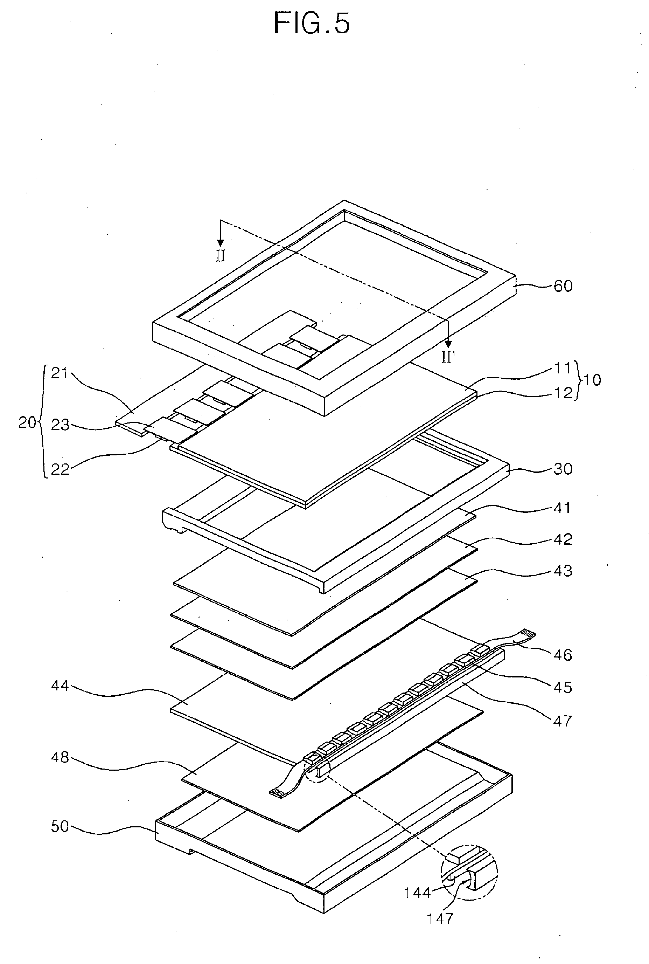

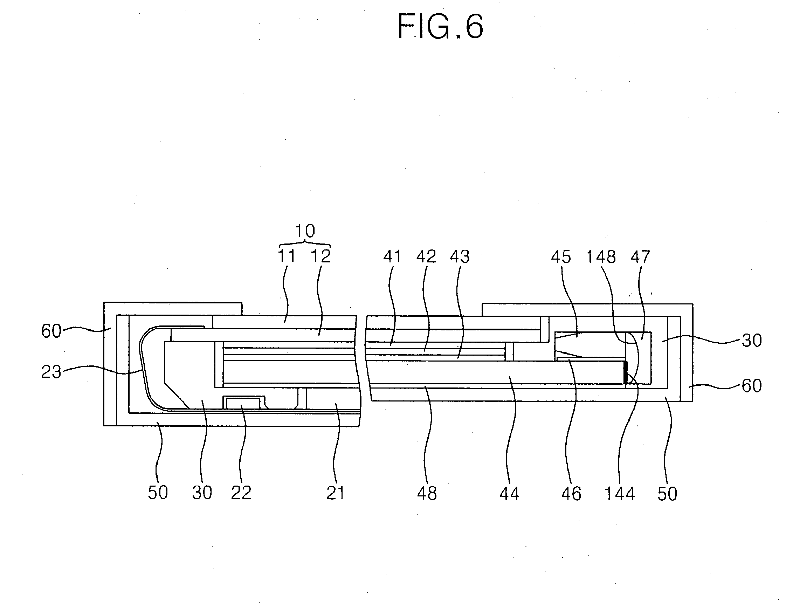

FIG. 5 is an exploded perspective view of another exemplary embodiment illustrating an LCD device according the present invention. FIG. 6 is a cross-sectional view taken along line II-II' of FIG. 5.

The LCD device shown in FIGs. 5 and 6 are substantially the same in configuration to those shown in FIGs. 1 and 2 except that a plurality of LEDs 45 are arranged on or above the light guide plate 44 so that the LEDs 45 overlap with at least a portion of the light guide plate 44.

The LEDs 45, as shown in FiGs. 5 and 6, are formed on the light guide plate 44 to overlap with at least a portion of the light guide plate 44. The LEDs 45 are mounted on the light source substrate 46 so that the LEDs 45 are attached onto the light guide plate 44. The optical sheets 41, 42 and 43 are disposed between the LC panel 10 and the light guide plate 44. The light source substrate 46 including the LEDs 45 mounted thereon may be disposed in a space formed by the thickness of the optical sheets 41, 42 and 43. The mold frame 30 includes a groove so that the groove prevents the LEDs 45 from being pressed onto regions corresponding to the LEDs 45 in the mold. Even though the LEDs 45 are formed on the light guide plate 44, the thickness of the LCD device does not increase, because the total thickness of the light source substrate 46 and the thickness of the LEDs 45 may be smaller than or equal to the total thickness of the optical sheets 41, 42 and 43. On the other hand, the size of the LCD device can be significantly reduced as described above while constantly maintaining the thickness of the LCD device.

In addition, the transmission of heat generated in the LEDs 45 to the light guide plate 44 through the light source substrate 46 reduces or effectively prevents the LEDs 45 from being overheated and thus leads to a higher display quality.

In another exemplary embodiment, the light path emitted from the LEDs 45 has the same length as shown in FIG. 4. Accordingly, the white spot phenomenon may be reduced or effectively prevented and a higher display quality may be realized. Therefore, the above described structure reduces the size of the mold frame, the top chassis and the bottom chassis, thereby reducing the weight of the LCD device.

In an exemplary embodiment, an LCD device includes a plurality of LEDs arranged on or below the light guide plate allowing a size and weight of the LCD device to be reduced.

In an exemplary embodiment, the length of the path of light emitted from the LEDs is increased by the reflecting plate, thereby preventing the white spot phenomenon in the display area and leading to the high display quality.

In an exemplary embodiment, the light source substrate having the LEDs may be attached to the bottom chassis or the light guide plate, so that the heat generated in the LEDs may be transmitted to the bottom chassis or the light guide plate. Accordingly, the LCD device may be prevented from being overheated, and a result, a higher display quality may be reached.

Although the present invention has been described with reference to certain exemplary embodiments thereof, it will be understood by those skilled in the art that a variety of modifications and variations may be made to the present invention without departing from the spirit or scope of the present invention defined in the appended claims, and their equivalents.

## Claims

1. A backlight assembly, comprising:
a light guide plate including an incident surface formed at a lateral side of the light guide plate;
a light emitting diode ("LED") positioned below the light guide plate; and
a reflecting plate which reflects light emitted from the LED towards the incident surface.

2. The backlight assembly of claim 1, wherein the reflecting plate comprises a groove which reflects light emitted from the LED and leads the reflected light to the incident surface.

3. The backlight assembly of claim 2, wherein the groove is a semi-pillar shaped groove.

4. The backlight assembly of claim 2, further comprising a light source substrate on which the LED is mounted, wherein the light source substrate supplies a driving signal to the LED.

5. The backlight assembly of claim 4, wherein the light source substrate is connected to the reflecting plate.

6. The backlight assembly of claim 4, wherein the light source substrate includes an LED pad supplying electric power to the LEDs connected thereto and a heat-releasing pad connected to the LED pad externally releasing heat generated in the LED.

7. The backlight assembly of claim 4, further comprising a bottom chassis accommodating the light source substrate, wherein the light source substrate is connected to the bottom chassis.

8. The backlight assembly of claim 1, wherein the incident surface of the light guide plate faces the reflecting plate.

9. The backlight assembly of claim 1, wherein a light emitting surface of the LED faces the reflecting plate.

10. A liquid crystal display device, comprising:
a liquid crystal panel displaying images;
a backlight assembly supplying light to the liquid crystal panel,
wherein the backlight assembly comprises a light guide plate including an incident surface formed at a lateral side of the light guide plate;
a light emitting diode ("LED") positioned above the light guide plate; and
a reflecting plate reflecting light emitted from the LED and directing the reflected lights towards the incident surface.

11. The liquid crystal display device of claim 10, wherein the reflecting plate comprises a groove reflecting a light emitted from the LED and directing the light emitted from the light emitting diodes to the incident surface.

12. The liquid crystal device of claim11, wherein the groove is a semi-pillar shaped groove.

13. The liquid crystal device of claim11, further comprising a light source substrate on which the LED is mounted, wherein the light source substrate supplies a driving signal to the LED.

14. The liquid crystal display device of claim 13, further comprising a bottom chassis accommodating the light source substrate, wherein the light source substrate is connected to a bottom surface of the light guide plate.

15. The liquid crystal display device of claim10, wherein the incident surface of the light guide plate faces the reflecting plate.

16. The liquid crystal display device of claim 10, wherein a light emitting surface of the LED faces the reflecting plate.
